# DEMANDE DE BREVET EUROPEEN

(11) **EP 0 838 439 A1**
(43) Date de publication de la demande: **29.04.1998**
(21) Numéro de dépôt: 97402473.9
(22) Date de dépôt: 20.10.1997
(51) Int. Cl.: C03B 37/012, C03B 37/014

(54) **Procédé de fabrication d'une préforme de fibre optique**

(30) Priorité: 24.10.1996 FR 9612975
(71) Demandeur: ALCATEL ALSTHOM COMPAGNIE GENERALE D'ELECTRICITE, 75008 Paris (FR)
(72) Inventeur: Gasca, Laurent, 91400 Orsay (FR); Le Sergent, Christian, 91460 Marcoussis (FR); Jolly, Jacques, 95310 Saint-Ouen-l'Aumone (FR)
(74) Mandataire: Buffière, Michelle

(57) **Abrégé**

Le procédé de fabrication d'une préforme (10) de fibre optique comprend une étape de dépôt externe par plasma. L'étape de dépôt externe par plasma est suivie d'une étape de traitement de la préforme par compactage isostatique à chaud dans un four (22). Cette étape supplémentaire de traitement par compactage isostatique à chaud permet d'éliminer les inclusions de gaz formées dans la préforme à cause d'une vitesse de dépôt par plasma élevée. Le procédé selon l'invention permet de réduire le temps de fabrication d'une préforme exempte d'inclusions de gaz.

## Description

L'invention concerne un procédé de fabrication d'une préforme de fibre optique comprenant une étape de dépôt externe par plasma. La fibre optique, obtenue après transformation de la préforme par étirage, sert plus particulièrement à la réalisation de câbles de télécommunication.

Le dépôt externe par plasma permet à partir d'un barreau de silice, d'accroître le diamètre de ce barreau jusqu'à obtenir une préforme au diamètre final requis. Il consiste à injecter dans la flamme d'une torche à plasma dirigée vers la surface extérieure du barreau, un précurseur à base de grains de silice ou encore d'un gaz réagissant avec l'oxygène pour former des particules de silice (en particulier du SiCl₄). Il se forme une ou plusieurs couches de silice sur la surface extérieure du barreau, chaque couche étant densifiée au fur et à mesure de sa formation grâce à la chaleur apportée par la torche à plasma.

L'inconvénient de cette technique de dépôt externe par plasma est qu'elle engendre des temps de fabrication des préformes relativement importants car il est difficile d'éviter la présence de bulles de gaz dans la ou les couches de silice ainsi formées si la vitesse de dépôt de la poudre de silice dépasse, pour un précurseur à base de gaz, les 5 grammes de silice par minute et, pour un précurseur à base de grains de silice, les 20 grammes de silice par minute.

Le but de l'invention est de proposer un procédé de fabrication d'une préforme de fibre optique comprenant une étape de dépôt externe par plasma dont le temps de fabrication est amélioré et qui préserve néanmoins les qualités de matériau requises dans le domaine des câbles de transmission optique.

A cet effet, l'invention a pour objet un procédé de fabrication d'une préforme de fibre optique comprenant une étape de dépôt externe par plasma d'une poudre de silice sur la surface extérieure d'un barreau de silice en vue d'obtenir une préforme ayant un diamètre requis, caractérisé par le fait qu'après l'étape de dépôt externe par plasma, on soumet la préforme à une étape de traitement par compactage isostatique à chaud.

L'idée à la base de l'invention consiste à réaliser le dépôt externe par plasma à une vitesse beaucoup plus élevée que la vitesse requise pour éviter la formation d'inclusions de gaz dans les couches de silices de la préforme, environ deux fois la vitesse requise. De ce fait, il est possible de fabriquer un certain nombre de préformes, certes présentant des inclusions de gaz, mais dans un temps inférieur au temps requis pour la fabrication d'une seule préforme ne présentant pas d'inclusion de gaz. Suite à quoi, ces préformes comportant des inclusions de gaz sont traitées dans un four par compactage isostatique à chaud pour éliminer les inclusions de gaz de sorte à obtenir des préformes ayant les qualités requises pour l'application aux câbles de communication optique. Ainsi, en appliquant le procédé selon l'invention, on réduit globalement le temps de fabrication d'une préforme. Par exemple, s'il faut 10 heures environ pour obtenir une préforme exempte d'inclusion de gaz en effectuant seulement un dépôt externe par plasma avec un précurseur à base de grains de silice, en appliquant l'invention on peut obtenir cette préforme en environ 7 heures. Dans le cas d'un dépôt externe par plasma avec un précurseur à partir d'un gaz SiCl₄, on passe d'un temps de fabrication de 40 heures environ à un temps de fabrication de 25 heures environ pour une préforme.

Le procédé de fabrication selon l'invention est décrit plus en détails ci-après en référence aux dessins.

La figure 1 illustre un premier mode de mise en oeuvre de l'étape de dépôt externe par plasma sur un barreau de silice.

La figure 2 illustre un second mode de mise en oeuvre de l'étape de dépôt externe par plasma sur un barreau de silice.

La figure 3 montre très schématiquement un four pour le compactage isostatique à chaud de plusieurs préformes.

Le procédé de fabrication d'une préforme de fibre optique selon l'invention comprend une étape de dépôt externe par plasma d'un précurseur de silice sur la surface extérieure d'un barreau de silice suivie d'une étape de traitement de cette préforme par compactage isostatique à chaud.

L'étape de dépôt externe par plasma est réalisée à une vitesse si élevée que la ou les couches de silice formées sur la surface extérieure du barreau de silice sont densifiées seulement partiellement, c'est-à-dire qu'il se forme des inclusions de gaz dans les couches de silices. En principe, la vitesse de dépôt dans le procédé selon l'invention est environ deux fois supérieure à une vitesse de dépôt par plasma normale pour éviter les inclusions d'air.

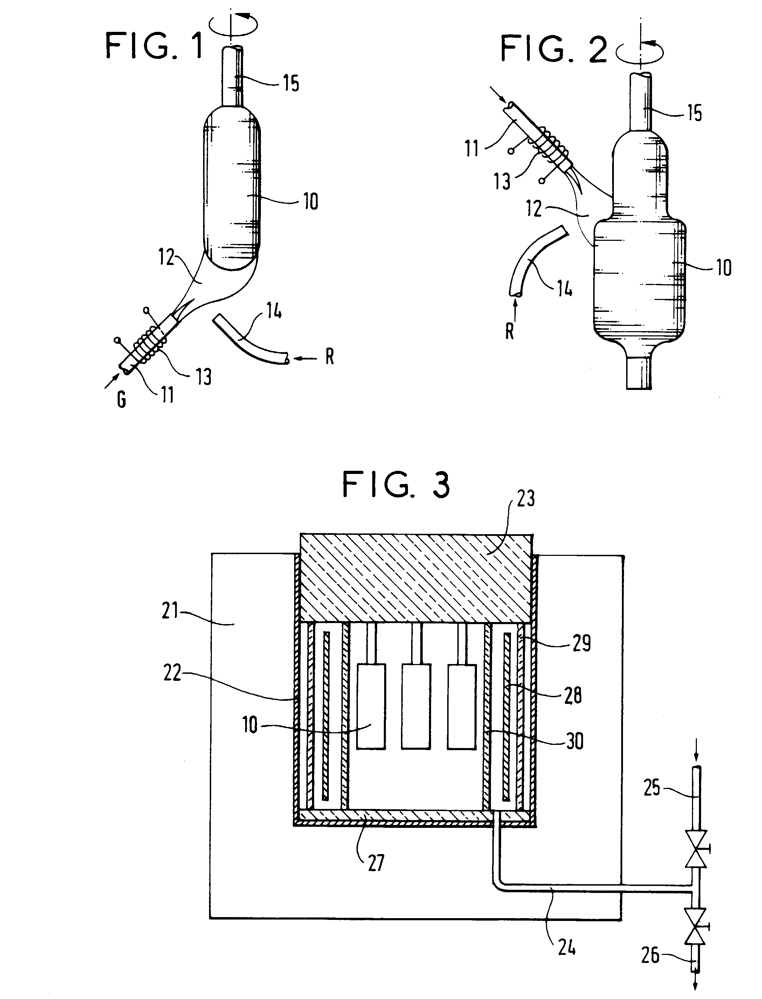

Figure 1, une installation de dépôt externe par plasma pour la mise en oeuvre du procédé selon l'invention comprend une torche 11 à plasma à l'intérieure de laquelle est introduit en G un gaz plasmagène comme de l'oxygène, de l'azote ou de l'argon. L'extrémité de la torche 11 est entourée par une bobine d'induction 13 et délivre un plasma de gaz dont la flamme 12 est dirigée sur l'extrémité inférieure d'un barreau de silice 10 tournant autour de son axe 15. Par ailleurs, un précurseur de silice R est éjecté à la sortie d'un conduit 14 dirigée vers la flamme 12. Une ou plusieurs couches de poudre de silice sont ainsi formées sur la surface extérieure du barreau. A noter toutefois, que du fait de la vitesse élevée de dépôt de silice sur le barreau, la préforme obtenue à la fin de l'étape de dépôt par plasma n'est pas exempte d'inclusions de gaz.

Figure 2, l'installation de dépôt est analogue à celle de la figure 1 mis à part que la torche à plasma 11 et le conduit d'éjection 14 de précurseur sont dirigés sur le côté du barreau.

La préforme obtenue par dépôt exteme par plasma est ensuite traitée dans un four par compactage isostatique à chaud (traitement à haute température sous pression de gaz) de façon à compléter la densification des couches de silice de la préforme en éliminant les inclusions de gaz. Les conditions de traitement de la préforme dans le four sont approximativement pour la température de l'ordre de 1400 °C, pour la pression de l'ordre de 1000 bars. Le gaz employé est de préférence un gaz inerte vis-à-vis de la silice comme l'Argon.

La température est fixée à un niveau suffisamment élevé pour rendre visqueuse la silice de la ou des couches de la préforme à traiter. La pression sous atmosphère du gaz inerte vis-à-vis de la silice est fixée pour être supérieure à la pression régnant à l'intérieur des bulles de gaz formées dans la ou les couches de silice de la préforme pendant l'étape de dépôt externe par plasma.

A la suite de l'étape de traitement dans le four, on obtient la fermeture des bulles dans la ou les couches de silice de la préforme et donc la densification complète de cette ou ces couches de silice.

A noter que le traitement par compactage isostatique peut entraîner une légère diminution de diamètre de la préforme. Il est donc souhaitable de viser en fin d'étape de dépôt externe par plasma, un diamètre de barreau légèrement supérieur au diamètre requis pour la préforme.

Figure 3, un exemple de four pouvant convenir pour la mise en oeuvre du procédé selon l'invention peut contenir plusieurs préformes telles que 10 car ces préformes presque densifiées en sortie de l'étape de dépôt externe par plasma ne se déforment pas trop dans le four. Le four électrique est entouré par une enceinte autoclave 21 à haute pression d'un type conventionnel. La cavité métallique 22 du four est fermée par un bouchon 23 qui sert de support pour les préformes à traiter (dans le cas de la figure 3, trois préformes sont traitées en même temps). Une canalisation 24 est prévue pour l'introduction du gaz de traitement, cette canalisation étant connectée à une canalisation d'entrée 25 et une canalisation de sortie 26. Le fond de la cavité est recouvert de matière céramique 27. Les éléments chauffant 28 du four sont placés entre une paroi 29 réfractaire de la cavité et une paroi 30 en céramique de la cavité.

## Revendications

1. Un procédé de fabrication d'une préforme (10) de fibre optique comprenant une étape de dépôt exteme par plasma d'un précurseur de silice sur la surface extérieure d'un barreau de silice en vue d'obtenir une préforme ayant un diamètre requis, caractérisé par le fait qu'après l'étape de dépôt externe par plasma, on soumet la préforme à une étape de traitement par compactage isostatique à chaud.

2. Le procédé selon la revendication 1, dans lequel le dépôt externe de plasma se fait à partir d'un précurseur à base de grains de silice.

3. Le procédé selon la revendication 1, dans lequel le dépôt externe par plasma se fait à partir d'un réactif gazeux à base d'un composé de silicium.
